# EUROPÄISCHE PATENTSCHRIFT

(11) **EP 1 863 707 B1**
(45) Veröffentlichungstag und Bekanntmachung des Hinweises auf die Patenterteilung: **01.04.2009**
(21) Anmeldenummer: 06723620.8
(22) Anmeldetag: 22.03.2006
(51) Int. Cl.: B64D 11/06

(54) **SITZ, INSBESONDERE FLUGGASTSITZ, MIT EINEM BESPANNTEIL MIT VARIABLER VORSPANNUNG**
SEAT, IN PARTICULAR AIRCRAFT PASSENGER SEAT COMPRISING A COVER PART WITH A VARIABLE PRE-TENSION
SIEGE, NOTAMMENT SIEGE DE PASSAGER D'AVION, COMPORTANT UN ELEMENT DE TENSION PRESENTANT UNE PRETENSION VARIABLE

(30) Priorität: 31.03.2005 DE 102005015143
(43) Veröffentlichungstag der Anmeldung: 12.12.2007
(73) Patentinhaber: Recaro Aircraft Seating GmbH & Co. KG, 74523 Schwäbisch Hall (DE)
(72) Erfinder: FORGATSCH, Oliver, 88709 Meersburg (DE); ERB, Andreas, 88239 Wangen i.A. (DE)
(74) Vertreter: Daub, Thomas
(86) Internationale Anmeldenummer: PCT/EP2006/002625
(87) Internationale Veröffentlichungsnummer: WO 2006/103016

(56) Entgegenhaltungen:
- AU-A- 8 044 982
- GB-A- 360 516
- GB-A- 2 335 843
- US-A- 3 258 259
- US-A- 4 712 834
- US-A- 5 482 353
- US-A- 5 797 652

## Beschreibung

Die Erfindung betrifft einen Sitz, insbesondere Fluggastsitz, mit Sitzkomponenten, wie einem Sitzteil und einer Rückenlehne, sowie mit mindestens einem Bespannteil, das in mindestens einer Richtung und zumindest abschnittsweise eine Vorspannung aufweist und sich zwischen Rahmenteilen einer zuordenbaren Sitzkomponente erstreckt.

Durch die US 6,669,143 B1 ist ein solcher Sitz in Form eines Fluggastsitzes bekannt, bei dem bis zu drei Einzelsitze in einer Reihe nebeneinander angeordnet eine Fluggastsitzreihe miteinander bilden. Jeder Sitz weist einen schalenförmigen Grundkörper auf, in dem die Rückenlehne und das jeweilige Sitzteil als starr ausgebildeter Grundrahmen aufgenommen sind. Zur Erhöhung des Komforts für den Fluggast oder Sitzbenutzer kann die Rückenlehne, innerhalb der zuordenbaren Rückenlehnenschale nach unten hin abgleiten Und das Sitzteil schiebt sich in Fluglängsrichtung unter Erhöhung der Sitztiefe gleichzeitig nach vorne wobei zur weiteren Komforterhöhung eine Aktuatoreinrichtung am freien Ende der Sitzteilvorderkante eine zugehörige Beinauflage ausschwenken kann. Um einen reibungslosen Bewegungsablauf sicherstellen zu können, sind zumindest am Rand des schalenförmigen Grundkörpers Rollenpaare vorgesehen, entlang denen der Grundrahmen von Rückenlehne und Sitzteil verschiebbar geführt ist.

Zur weiteren Komforterhöhung erstrecken sich insbesondere im Rückenlehnenbereich quer zur Sitzlängsrichtung einzelne bügelförmige Dehnelemente, die in Flugrichtung gesehen eine Vorwölbung oder einen Überstand aufweisen, über die ein elastisches Bespannteil gezogen mit Vorspannung an diesen anliegt und dergestalt eine Vorspannung des Bezugmaterials für den Sitz vorgibt, in den der Sitzbenutzer später einsitzt und im Sitz gehalten ist. Insbesondere im unteren Rückenbereich erfolgt dergestalt eine so genannte Lordosenabstützung, die den Sitzbenutzer bei der Sitzarbeit entlastet und zu dessen Wohlbefinden mit beiträgt, auch bei anstehenden Langstreckenflügen. Die bekannte Lösung eines Sitzes mit vorgespanntem Bespannteil ist immer nur auf das Durchschnittsgewicht eines Sitzbenutzers ausgelegt und insbesondere besteht keine Möglichkeit, die Vorspannung des Bespannteils individuell an den jeweils einsitzenden Sitzbenutzer anpassen zu können.

Des Weiteren ist aus der US 3,258,259 A ein gattungsgemäßer Sitz mit einer Rückenlehne bekannt, die eine Spannvorrichtung aufweist. Über zwei seitlich, beidseitig eines Bespannteils angeordnete Schrauben kann die Spannung des Bespannteils verändert werden.

Der GB 2 335 843 A kann eine Vorrichtung zur Anpassung eines Sitzes im Lendenbereich entnommen werden. Es sind zwei Spannvorrichtungen beidseitig eines Bespannbands angeordnet, die mittels eines Bowdenzugs simultan betätigbar sind.

Ausgehend von diesem Stand der Technik liegt daher der Erfindung die Aufgabe zugrunde, die bekannte Sitzlösung unter Beibehalten ihrer Vorteile dahingehend weiter zu verbessern, dass diese individuell an die Bedürfnisse einer Vielzahl von Sitzbenutzern anpassbar ist. Eine dahingehende Aufgabe löst ein Sitz mit den Merkmalen des Patentanspruches 1 in seiner Gesamtheit.

Die Erfindung geht aus von einem Sitz, insbesondere einem Fluggastsitz, mit Sitzkomponenten, wie einem Sitzteil und einer Rückenlehne, mit mindestens einem Bespannteil, das in mindestens einer Richtung und zumindest abschnittsweise eine Vorspannung aufweist und sich zwischen Rahmenteilen einer zuordenbaren Sitzkomponente erstreckt, und mit mindestens zwei ansteuerbaren Einstelleinrichtungen, die in einem vorgebbaren Bereich und reversibel die Vorgabe verschiedener Vorspannungen für das Bespannteil ermöglichen und, jeweils an gegenüberliegenden Rahmenteilen angeordnet, am Bespannteil angreifen.

Dadurch, dass gemäß dem kennzeichnenden Teil des Patentanspruches 1 die Einstelleinrichtungen in unterschiedlichen Höhenlagen angeordnet sind, kann eine ausgesprochene Feinjustierung für die Vorspannung im Bespannteil erreicht werden.

Mit den Einstelleinrichtungen lässt sich eine angenehm empfundene Vorspannung vorgeben, und mit dieser Vorspannung stützen sich dann die jeweiligen Körperteile des Sitzbenutzers am Sitz, insbesondere im Bereich der Rückenlehne, ab. Die jeweilige Vorspannung lässt sich in einem relativ weiten Bereich einstellen und auch wieder reversibel vollständig lösen, so dass eine Art dynamisches Sitzkonzept realisiert ist, was insbesondere bei Langstreckenflügen dem Sitzbenutzer die Möglichkeit eröffnet, während des Fluges verschiedenste Anpassungen vorzunehmen. So lässt sich beispielsweise zum Arbeiten oder für die Essenseinnahme der Sitz steifer auslegen und weicher, wenn er zur Komforterhöhung bei geneigter Rückenlehne in eine Ruheposition gebracht ist.

Die erfindungsgemäße Sitzlösung ist nicht auf einen Einsatz bei der Rückenlehne eingeschränkt, sondern erlaubt dergestalt auch eine Härteanpassung für das Aufsitzen auf das Sitzteil und kann gegebenenfalls auch für eine Bein- und/oder Fußauflage Anwendung finden. Vorzugsweise ist dabei vorgesehen, dass zum Erreichen unterschiedlicher Vorspannungen für das jeweilige Bespannteil in einer Spannstellung mehrere Einstelleinrichtungen vorhanden sind, so dass dergestalt sektorweise die Vorspannung änderbar und individuell einstellbar ist. Entlang einer Rückenlehne oder Sitzteilfläche lässt sich dergestalt in einem Einstellbereich eine weiche Sitzauflage realisieren und in einem anderen Bereich eine entsprechend härtere. Durch oszillierende Ansteuerung der jeweiligen Einstelleinrichtung lässt sich impulsartig die Zugkrafteinleitung in das jeweilige Bespannteil variieren, so dass sich dergestalt auch Massagefunktionen über das Bespannteil realisieren lassen.

Es ist überraschend, dass mit geringen Betätigungskräften an der Einstelleinrichtung bereits eine deutliche Änderung der Vorspannung am Bespannteil einsetzt, so dass sich sehr feinfühlig eine Sitzkomforterhöhung realisieren lässt.

Die erfindungsgemäße Sitzlösung ist kostengünstig in der Realisierung und funktionssicher im Gebrauch, so dass sie auch im Economy-Sitzbereich von Flugzeugen sehr gut einsetzbar ist. Die erfindungsgemäße Sitzlösung braucht auf die Anwendung bei Flugzeugen nicht eingeschränkt zu sein, sondern kann auch bei anderen Fahrzeugen, wie Schiffsfähren, Omnibussen od. dgl., Anwendung finden. Ferner sind auch Anwendungen denkbar, wie bei der Bestuhlung von Konzert- und Kinosälen sowie im medizinischen Bereich als Behandlungsstuhl oder Behandlungsbett.

Weitere vorteilhafte Ausführungsformen sind Gegenstand der weiteren Unteransprüche.

Im folgenden wird der erfindungsgemäße Sitz anhand verschiedener Ausführungsbeispiele nach der Zeichnung näher erläutert. Dabei zeigen in prinzipieller und nicht maßstäblicher Darstellung die
- Fig. 1: eine perspektivische Ansicht auf einen Teil eines Sitzes in Form eines Fluggastsitzes ohne Polsterschaumteile sowie ohne einen Bezugsstoff;
- Fig. 2: in vergrößerter Darstellung eine perspektivische Draufsicht auf einen Bestandteil der Einstelleinrichtung für eine Sitzlösung nach der Fig.1;
- Fig. 3: in rückwärtige, perspektivischer Darstellung eine eben daliegende Rückenlehne nach der Fig.1;
- Fig. 4: eine stirnseitige Ansicht auf eine geänderte Ausführungsform der Einstelleinrichtung, gesehen in Blickrichtung des Pfeiles X in Fig.3,
- Fig. 5: eine perspektivische Ansicht auf eine weitere geänderte Ausführungsform der Einstelleinrichtung.

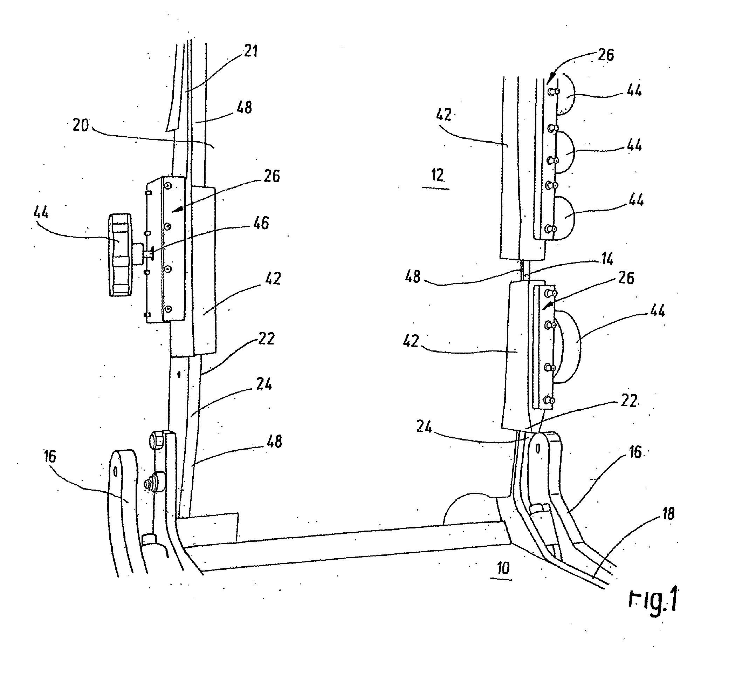

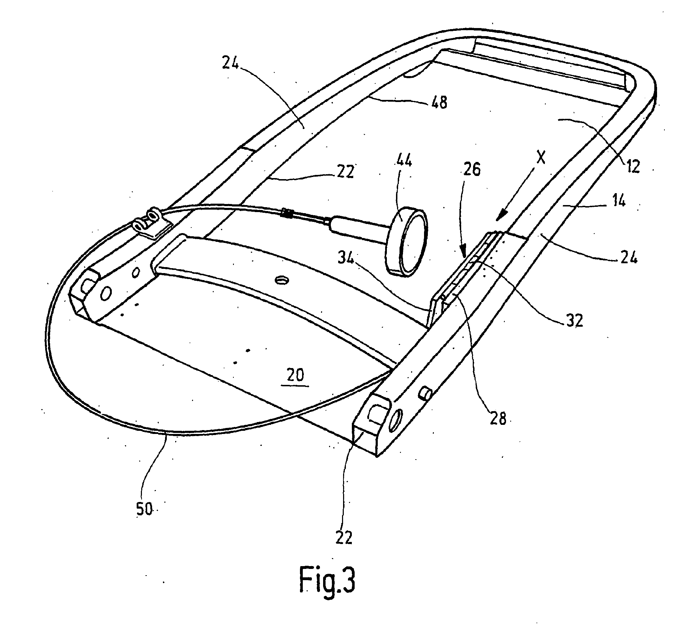

Der in der Fig.1 in einer Art Grundzustand teilweise dargestellte Sitz weist Sitzkomponenten auf, wie ein Sitzteil 10 sowie eine Rückenlehne 12. Die Rückenlehne 12 weist ein Rahmenprofil 14, insbesondere in U-Form, auf, wie es beispielhaft in der Fig.3 in der Darstellung verbessert wiedergegeben ist. Das genannte Rahmenprofil 14 erstreckt sich gemäß Darstellung nach der Fig.1 zwischen zwei winkelförmigen Strukturteilen 16, an die später einmal nicht näher dargestellte Armauflagen im oberen Bereich schwenkbar angelenkt sind. Im unteren Bereich ist das Rahmenprofil 14 mit einer Trägerstruktur 18, vorzugsweise schwenkbar verbunden, die das plattenförmige Sitzteil 10 trägt und die auf ihrer Unterseite eine nicht näher dargestellte Ständerbeinkonstruktion aufweist, mittels deren der Sitz gegenüber einem Kabinenboden aufständerbar und an diesem festlegbar ist. Der dahingehende Aufbau von Fluggastsitzen ist üblich, so dass an dieser Stelle hierauf nicht mehr näher eingegangen wird.

Ferner sind der besseren Darstellung wegen die Polster- und sonstigen Bezugsmaterialien an dem Sitz weggelassen. Innerhalb des U-förmigen Rahmenprofils 14 erstreckt sich ein Bespannteil 20 und seine beiden freien Längsränder 22 verlaufen parallel zu den beiden Längsrahmenteilen 24 des Rahmenprofils 14. Ferner sind jeweils als Ganzes mit 26 bezeichnete Einstelleinrichtungen vorhanden, die in einem vorgebbaren Bereich und reversibel die Vorgabe verschiedener Vorspannungen für das jeweilige Bespannteil 20 ermöglichen. Hierfür ist mittels der jeweiligen Einstelleinrichtung 26 das zuordenbare Bespannteil 20 oder Teile davon in Richtung mindestens eines Rahmenteils 24 quer zur Sitzlängsrichtung in verschiedenen Spannstellungen spannbar und in diesen Stellungen festlegbar sowie reversibel eine Lösestellung erreichbar. Hierbei ist vorgesehen, dass mit wachsender Einwirkung der Einstelleinrichtung 26 sich Spannstellungen größerer Vorspannung ergeben und dass in der Lösestellung ein vorgebbarer Ausgangswert einer Grundvorspannung erreicht ist.

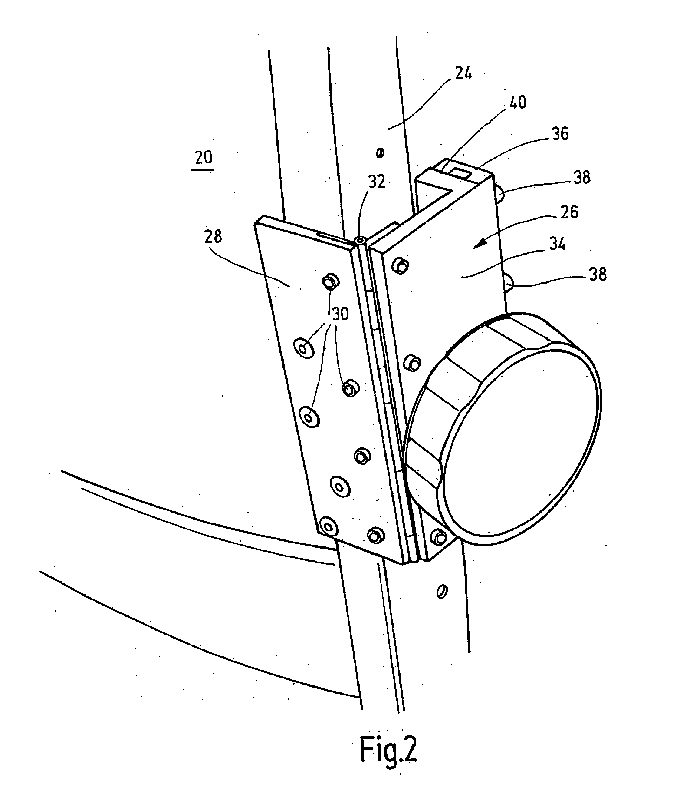

Zur näheren Erläuterung der Einstelleinrichtung 26 sei diese nunmehr anhand einer konkreten Ausführungsform nach der Fig.2 näher erläutert. Die dort gezeigte Einstelleinrichtung 26 hintergreift mit einem winkelförmigen Anschlag 28 in der Art einer Festlegeplatte den rückwärtigen Bereich eines Längsrahmenteils 24. Über entsprechende Niet- und Schraubverbindungen 30 ist die dahingehende feste Verbindung hergestellt. Insbesondere erlaubt die Vielzahl an Niet- und Schraubverbindungen 30 eine hohe Krafteinleitung von Zug- und Vorspannungskräften über die Einstelleinrichtung 26 in die Grundstruktur des Sitzes in Form des zuordenbaren Längsrahmenteils 24. An den Anschlag 28 ist über eine Scharnierverbindung 32 eine Querplatte 34 derart angelenkt, dass diese nach beiden Seiten um ein vorgebbares Maß schwenkbar an dem Anschlag 28 gehalten ist. Hierzu weist in Blickrichtung auf die Fig.2 gesehen der Anschlag 28 randseitig einen Überstand auf und die Querplatte 34 erstreckt sich in ihrer Ausgangsstellung und unter Beibehalten dieses Abstandes im rechten Winkel zu dem Anschlag 28.

An ihrem vorderen freien Ende ist die Querplatte 34 winkelförmig abgekröpft und trägt stirnseitig ein U-förmiges Klammerteil 36 in der Art einer Eingriffsleiste, die mittels Einzelschrauben 38 von ihrem freien Klemmspalt 40 her lageeinstellbar ist. In diesen Klemmspalt 40 greifen, wie dies insbesondere die Fig. 1 zeigt, gegebenenfalls mit einer zusätzlichen Randverstärkung 42 versehen die freien Längsränder'22 des Bespannteils 20 ein. Der dahingehende Eingriff ist der vereinfachten Darstellung wegen in der Fig.2 nicht wiedergegeben. In etwa mittig und von außen her ist die Querplatte 34 mit einem Handrad 44 versehen, das an seinem freien stirnseitigen Ende einen Schraubenbolzen 46 mit einem Außengewinde aufweist, das eine nicht näher dargestellte Gewindehülse mit Innengewinde auf der Innenseite der Querplatte 34 durchgreift, um dergestalt die Anbindung mit der sonstigen Einstelleinrichtung 26 zu realisieren. Das freie, nicht näher dargestellte Ende des Schraubenbolzens 46 stützt sich dann in jeder Funktionseinstellung des Handrades 44 an der Außenseite des jeweiligen Längsrahmenteils 24 ab. Wird das Handrad 44 zugestellt, also in Richtung des Rahmenteils 24 eingeschraubt, wird die Querplatte 34 auf das Handrad 44 über die Schraubenhülse zugestellt und in Blickrichtung auf die Fig.2 gesehen schwenkt die Querplatte 34 im Uhrzeigersinn um die Scharnierverbindung 32 um einen vorgebbaren Betrag. Der dahingehende Schwenkbetrag entspricht dann einer erhöhten Zugkrafteinleitung in das Bespannteil 20, das um diesen Betrag von dem gegenüberliegenden Rahmenteil 24 wegbewegt und dergestalt gespannt wird.

In Blickrichtung auf die Fig. 1 gesehen sind zwei gleiche Einstelleinrichtungen 26 nach der Fig.2 in unterschiedlichen Höhenlagen am Rückenlehnenrahmengestell angeordnet, so dass dergestalt in verschiedenen Zug- oder Höhenlagen die Krafteinleitung erfolgt, wobei immer am jeweils gegenüberliegenden Ende von der jeweiligen Einstelleinrichtung 26 aus gesehen das Bespannteil 20 an linienförmigen Festlegestellen 48 festgelegt ist, beispielsweise indem man das Bespannteil 20 randseitig entlang den Rahmenteilen festgenäht hat. Es ist für einen Durchschnittsfachmann überraschend, dass er mit zwei in unterschiedlichen Höhenlagen vorhandenen Einstelleinrichtungen 26 der genannten Art eine ausgesprochene Feinjustierung für die Vorspannung im Bespannteil 20 erhält, die bei entgegengesetzter Betätigung des Handrades 44 bis zu einem vorgebbaren Ausgangswert auch wieder lösbar ist.

Ist das Bespannteil 20 unter anderem auf seiner Vorderseite mit entsprechenden Polstermaterialien und Bezugsstoffen versehen, überträgt sich die dahingehend geänderte Vorspannung auf die genannten Teile und mithin auf den Rückenbereich eines nicht näher dargestellten Sitzbenutzers. Die dahingehenden Einstellmöglichkeiten könnten dem Grunde nach auch für ein nicht näher dargestelltes Bespannteil des Sitzteils 10 vorgesehen sein sowie im Bereich von etwa sich an das jeweilige Sitzteil 10 anschließenden, nicht näher dargestellten Bein- und/oder Fußauflagen. Auch besteht grundsätzlich die Möglichkeit, eine gezeigte Einstelleinrichtung 26 auf der Oberseite des U-förmigen Rahmenprofils 14 anzubringen, um dann in Sitzlängsrichtung die Vorspannung des Bespannteils 20 zu regulieren.

Bei der gezeigten Ausführungsform ist das Bespannteil 20 einstückig als flexibles Flächenmaterial bestimmt und bildet dergestalt eine Art textiles Flächengebilde aus; es sind hier aber auch nicht näher dargestellte Ausführungsformen denkbar, bei denen das Bespannteil streifenförmig sich zwischen den Längsrahmenteilen 24 erstreckt oder eine Art Netz- oder Gitterstruktur ausbildet. Ferner würde auch die Möglichkeit bestehen, anstelle eines Flächengebildes für das Bespannteil 20 dieses aus Einzelfilamenten auszubilden, gegebenenfalls auch mit eingeschalteten Zwischenkoppelgliedern in Form von Federelementen und jedem Einzelfilament in der Art eines Einzelstringers oder Gruppen davon einer Einstelleinrichtung 26 zuzuordnen (nicht dargestellt).

In Blickrichtung auf die Fig.1 gesehen oben rechts ist eine modifizierte Einstelleinrichtung 26 gezeigt, mit drei in Reihe übereinander angeordneten Einzelhandrädern 44, die jeweils gemeinsam auf eine Querplatte 34 der Einstelleinrichtung 26 einwirken. Es hat sich gezeigt, dass insbesondere mit der dahingehenden Anordnung eine sehr gute Feinjustierung für die jeweils gewünschte Vorspannung erreichbar ist und dass sich hier sehr exakt für einen Sitzbenutzer günstige Vorspannwerte vorgeben lassen, Anstelle der gezeigten Handräder 44, die vorzugsweise von Hand durch den Sitzbenutzer einstellbar sind, besteht grundsätzlich auch die Möglichkeit der Vorspannungseinstellung über nicht näher dargestellte Aktuatoren, wie pneumatische Arbeitszylinder od. dgl., um dergestalt über eine zentrale Steuerstelle die jeweilige Einstellung reversibel zu veranlassen. Die jeweiligen Handräder 44 können mit nicht näher dargestellten Markierungen versehen sein, um dergestalt dem Sitzbenutzer visuell von außen erkennbar eine Information über die jeweilige Einstellsituation und die Vorspannsituation für das Bespannteil 20 zu geben.

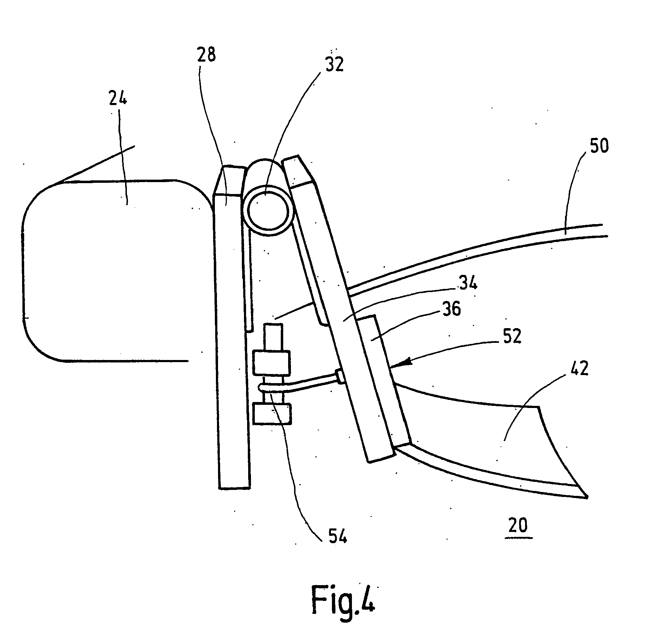

Die nachfolgende Ausführungsform nach den Fig. 3 und 4 wird nur noch insofern erläutert, als sie sich wesentlich von der vorangegangenen Ausführungsform unterscheidet. Dabei werden im Grunde dieselben Funktionsbauteile mit denselben Bezugszeichen versehen, so dass die bisher getroffenen Ausführungen insoweit auch für die geänderte Ausführungsform gelten.

Bei der Ausführungsform nach der Fig.3 ist das Handrad 44 an einen üblichen Bowdenzug 50 gekoppelt und das freie Ende des Bowdenzuges in Form eines Drahtendes 52 (vgl. Fig. 4) durchgreift die Querplatte 34, die wiederum über ein flächiges Klammerteil 36 als Koppelteil eine Randverstärkung 42 im rückwärtigen Bereich des Bespannteils 20 klemmend aufnimmt. Die Querplatte 34 ist wiederum über eine Scharnierverbindung 32 an dem winkelförmigen Anschlag 28 schwenkbar angelenkt, wobei in Abkehr der ersten Ausführungsform der dahingehende Anschlag 28 flächig an der Innenseite eines zugeordneten Längsrahmenteils 24 anliegt. Das Drahtende 52 ist ansonsten um eine zapfen- oder rollenförmige Umlenkstelle 54 zwischen Querplatte 34 und Anschlag 28 im rechten Winkel von der Zugrichtung des Bowdenzuges 50 kommend umgelenkt und bei entsprechender Betätigung des Handrades 44 zieht der Bowdenzug 50 an und das Drahtende 52 zieht die winkelförmig geneigte Querplatte 34 in Richtung auf den Anschlag 28 mit der Folge, dass die über das Klammerteil 36 festgelegte Randverstärkung 42 des Bespannteils 20 eine Zugkraft in Richtung auf das Längsrahmenteil 24 erfährt mit der Folge, dass die Vorspannung des Bespannteils 20 erhöht wird. Auf der gegenüberliegenden Seite der Einstelleinrichtung 26 ist das Bespannteil 20 wiederum entlang von Festlegestellen 48 (Fig.3) mit dem gegenüberliegenden Rahmenteil 24 fest verbunden.

Wird das Handrad 44 bei der geänderten Ausführungsform entgegengesetzt gedreht, löst sich die Vorspannung und das Bespannteil 20 kann unter der Wirkung der Körperkraft des Sitzbenutzers wieder in eine vorgegebene Ausgangsstellung zurückkehren. Auch bei der dahingehend geänderten Ausführungsform läßt sich das Handrad 44 durch eine geeignete, von außen ansteuerbare Aktuatoreinrichtung (nicht dargestellt) ersetzen. Anstelle eines textilen Materials, das vorzugsweise nicht brennbar ist, können auch Kunststoffbespannlösungen treten, die jedoch nicht derart starr ausgelegt sein dürfen, als dass die Einleitung einer die Vorspannung ändernden Zugkraft nicht mehr möglich wäre.

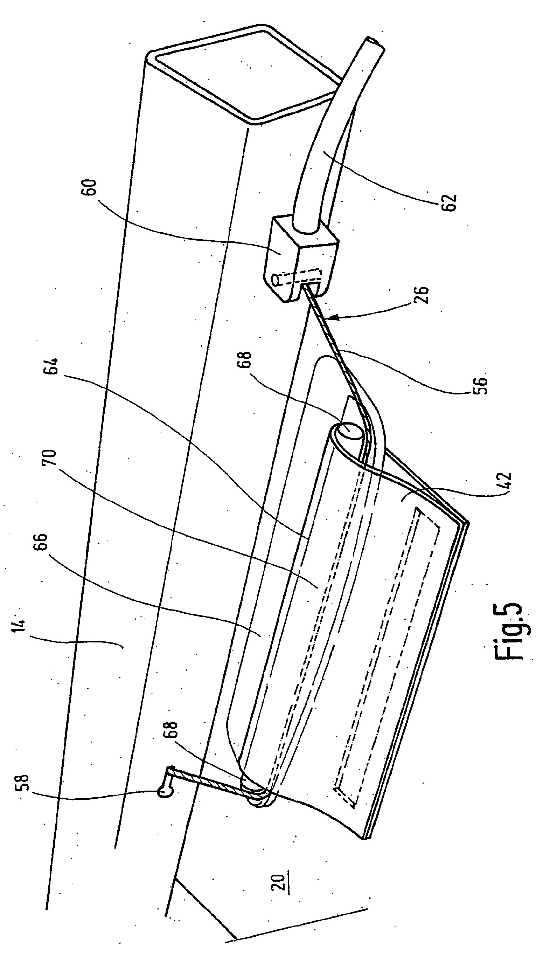

Bei der Ausführungsform nach der Fig.5 ist an der rückwärtigen Seite des Bespannteils 20 eine Randverstärkung 42 in Form eines schlaufenartigen Gewebestückes angebracht, beispielsweise angenäht. Durch die Schlaufe ist als Teil der Einstelleinrichtung 26 ein Drahtseil 56 geführt, das an seinem einen, in Fig.5 gezeigten freien Endbereich in eine schlüsselförmige Ausnehmung 58 im Rahmenprofil 14 eingreift, das in der Fig.5 abgeschnitten nur in der Art eines Seitenholmes teilweise wiedergegeben ist. Hierfür weist das genannte Drahtende eine entsprechende Verdickung, beispielsweise in Form eines nicht näher dargestellten Kugelendstückes, auf, das in die verbreiterte Öffnung der Ausnehmung 58 einsetzbar ist und dann durch Hintergriff in der schlitzförmigen Verjüngung der Ausnehmung 58 gemäß der Darstellung nach der Fig.5 verhakt ist.

Gegenüberliegend wird das Drahtseil 56 über eine innenseitig am Rahmenprofil 14 angeordnete Umlenkeinrichtung 60 mit integriertem Umlenkzapfen herumgeführt und dann in einer Kabelführung 62 aufgenommen, die an ihrem freien Ende in einen nicht näher dargestellten Betätigungs-Handhebel mündet, der für das andere freie Drahtseilende eine Umlenkrolle aufweist, die vergleichbar den Winschen-Lösungen bei Segelbooten in der einen Richtung hebelgesteuert eine Anzugbewegung des Seiles 56 erlaubt und in der anderen Richtung die Rückstellbewegung solange hemmt, bis eben der Handhebel in seine Ausgangsposition rückgestellt ist. Dergestalt läßt sich das in der Schlaufe geführte Seilstück in Richtung des Holmes des Rückenlehnenprofils 14 ziehen und somit eine Vorspannung in das Bespannteil 20 einteilen. Um den textilen Schlaufenbereich der Randverstärkung 42 zu schonen, durchgreift die Schlaufe eine Schlitzführung 64 in einer flach ausgestalteten Basisplatte 66, die insbesondere länger ausgebildet ist als der genannte Schlaufendurchgriff und die endseitig am Austritt der Schlaufe jeweils eine Führungsrolle 68 aufweist, entlang denen die jeweils innenliegende Seilstrecke des Seiles 56 geführt ist. Um eine sichere Führung zu gewährleisten, kann darüber hinaus eine zweite Führungsplatte 70 vorgesehen sein, die einen axialen Abstand zu der Basisplatte 66 einnimmt, wobei sich dann die jeweilige Führungsrolle 68 in dem derart gebildeten Abstand erstreckt und das genannte, in der Schlaufe geführte Seilstück ist dann nach beiden Seiten hin innerhalb der Schlaufe durch die Platten 66,70 abgedeckt, so dass auch insoweit mit Sicherheit eine Schädigung des empfindlichen Schlaufenbereiches ausgeschlossen ist.

Insgesamt entsteht durch die dahingehend geänderte Einstelleinrichtung 26 eine Art "lose Rolle", wodurch die Betätigungskraft minimiert ist. Wichtig ist dabei auch, dass über die Umlenkeinrichtung 60 mit ihrer nahezu recht winkligen Umlenkung für das Seil 56 eine Art Widerlager für das sich anschließende Bowdenzugsystem geschaffen ist. Anstelle der genannten Führungsrollen 68 könnte auch zumindest an einer Seite der jeweiligen Platte 66 und/oder 70 eine Art Führungskanal vorgesehen sein, entlang dem das Drahtseil 56 führbar ist.

Da ein wesentlicher Einfluß auf das Wohlbefinden eines Passagiers durch die Kontur der Rückenlehne 12 hervorgerufen ist und diese das sog. musculoskeletale System eines Fluggastsitzes maßgebend mit beeinflußt, ist zur Steigerung des Wohlbefindens eine Anpassung der Rückenlängskontur vor allem im Bereich der Lendenlordose notwendig, wobei mit der erfindungsgemäßen individuellen Sitzeinstellmöglichkeit Unterschiede abhängig von Körpergröße, individuellem Körperbau sowie Gewicht berücksichtigt werden können. Die erfindungsgemäße Lösung läßt sich sehr kostengünstig realisieren und ist insbesondere bei individueller Handeinstellung sehr funktionssicher im Gebrauch.

## Patentansprüche

1. Sitz, insbesondere Fluggastsitz, mit Sitzkomponenten, wie einem Sitzteil (10) und einer Rückenlehne (12), mit mindestens einem Bespannteil (20), das in mindestens einer Richtung und zumindest abschnittsweise eine Vorspannung aufweist und sich zwischen Rahmenteilen (24) einer zuordenbaren Sitzkomponente erstreckt, und mit mindestens zwei ansteuerbaren Einstelleinrichtungen (26), die in einem vorgebbaren Bereich und reversibel die Vorgabe verschiedener Vorspannungen für das Bespannteil (20) ermöglichen und, jeweils an gegenüberliegenden Rahmenteilen (24) angeordnet, am Bespannteil (20) angreifen, **dadurch gekennzeichnet, dass** die Einstelleinrichtungen (26) in unterschiedlichen Höhenlagen angeordnet sind.

2. Sitz nach Anspruch 1, **dadurch gekennzeichnet, dass** mittels der jeweiligen Einstelleinrichtung (26) das zuordenbare Bespannteil (20) oder Teile davon in Richtung mindestens eines Rahmenteiles (24) quer zur Sitzlängsrichtung In verschiedenen Spannstellungen spannbar und in diesen Stellungen festlegbar sind, sowie reversibel eine Lösestellung erreichbar ist.

3. Sitz nach Anspruch 2, **dadurch gekennzeichnet, dass** mit wachsender Einwirkung der Einstelleinrichtung (26) sich Spannstellungen größerer Vorspannung ergeben und dass in der Lösestellung ein vorgebbarer Ausgangswert einer Vorspannung vorliegt.

4. Sitz nach einem der Ansprüche 1 bis 3, **dadurch gekennzeichnet, dass** zum Erreichen unterschiedlicher Vorspannungen für das jeweilige Bespannteil (20) in einer Spannstellung mehrere Einstelleinrichtungen (26) vorhanden sind, die über das jeweils zuordenbare Rahmenteil (24) verteilt, eine vorzugsweise voneinander verschiedene Zugkrafteinleitung in das jeweilige Bespannteil (20) bewirken.

5. Sitz nach Anspruch 1, **dadurch gekennzeichnet, dass** der Angriff der jeweiligen Einstelleinrichtung (26) am jeweiligen Bespannteil (20) in unterschiedlichen Abschnitten desselben erfolgt.

6. Sitz nach einem der vorhergehenden Ansprüche, **dadurch gekennzeichnet, dass** die Rahmenteile (24) als Bestandteil der Rückenlehne (12) einen Raum aufspannen, der zumindest teilweise von dem jeweiligen Bespannteil (20) überspannt ist.

7. Sitz nach einem der vorhergehenden Ansprüche, **dadurch gekennzeichnet, dass** das jeweilige Bespannteil (20) als Flächenmaterial oder aus Einzelsegmenten bestehend, eine flächenmäßige Ausdehnung zwischen den Rahmenteilen (24) hat und eine vorgebbare Elastizität aufweist.

8. Sitz nach einem der Ansprüche 4 bis 7, **dadurch gekennzeichnet, dass** die jeweilige Einstelleinrichtung (20), sich mit einer Gegenhaltekraft am jeweiligen Rahmenteil (24) abstützend, über ein Koppelteil (Klammerteil (36)) die Zugkrafteinleitung auf das jeweilige Bespannteil (20) bewirkt.

9. Sitz nach Anspruch 7 oder 8, **dadurch gekennzeichnet, dass** das jeweilige Bespannteil (20) aus einem vorzugsweise einlagigen Gewebe in der Art eines textilen Flächengewebes besteht.

10. Sitz nach einem der Ansprüche 7 oder 8, **dadurch gekennzeichnet, dass** die jeweilige Einstelleinrichtung (26) mittels einer Handradbetätigung (44) das Koppelteil (36) zur Erhöhung der Zugkraft auf das zuordenbare Rahmenteil (24) zustellt.

## Claims

1. Seat, in particular aircraft passenger seat, with seat components, such as a seat part (10) and a back rest (12), with at least one cover part (20) which has a pretension in at least one direction and at least in some sections and extends between frame parts (24) of an assignable seat component, and with at least two activatable adjustment devices (26) which permit the stipulation, within a predefiriable range and in a reversible manner, of different pretensions for the cover part (20) and, arranged in each case on opposite frame parts (24), act on the cover part (20), **characterized in that** the adjustment devices (26) are arranged at different height positions.

2. Seat according to Claim 1, **characterized in that**, by means of the respective adjustment device (26), the assignable cover part (20) or parts thereof can be tensioned transversely with respect to the longitudinal direction of the seat in the direction of at least one frame part (24) in different tensioning positions and can be secured in said positions, and also a release position can be achieved in a reversible manner.

3. Seat according to Claim 2, **characterized in that**, as the effect of the adjustment device (26) increases, tensioning positions of greater pretension arise, and **in that** a predefinable initial pretension value is present in the release position.

4. Seat according to one of Claims 1 to 3, **characterized in that**, in order to achieve different pretensions for the respective cover part (20) in a tensioning position, there is a plurality of adjustment devices (26) which, distributed over the respectively assignable frame part (24), introduce tensile force, preferably in a different manner from one another, into the respective cover part (20).

5. Seat according to Claim 1, **characterized in that** the respective adjustment device (26) engages on the respective cover part (20) in different sections of the same.

6. Seat according to one of the preceding claims, **characterized in that** the frame parts (24), as part of the backrest (12), define a space which is at least partially covered by the respective cover part (20).

7. Seat according to one of the preceding claims, **characterized in that** the respective cover part (20), in the form of surface material or comprising individual segments, has a surface extent between the frame parts (24) and has a predefinable elasticity.

8. Seat according to one of Claims 4 to 7, **characterized in that** the respective adjustment device (26), supported on the respective frame part (24) by a counter holding force, introduces the tensile force to the respective cover part (20) via a coupling part (clip part (36)).

9. Seat according to Claim 7 or 8, **characterized in that** the respective cover part (20) is composed of a preferably single-layer woven fabric in the manner of a two-dimensional textile fabric.

10. Seat according to either of Claims 7 and 8, **characterized in that** the respective adjustment device (26), by means of actuation of a hand wheel (44), adjusts the coupling part (36) in order to increase the tensile force to the assignable frame part (24).

## Revendications

1. Siège, en particulier siège de passager d'avion, avec des composants de siège comme une partie d'assise (10) et un dossier (12), comportant au moins un élément de tension (20), qui présente une précontrainte dans au moins une direction et au moins par parties et qui s'étend entre deux parties de châssis (24) d'un composant de siège pouvant être associé, et comportant au moins deux dispositifs de réglage commandables (26), qui permettent de définir des précontraintes différentes pour l'élément de tension (20) dans une zone prédéfinissable et de manière réversible et qui agissent sur l'élément de tension (20) en étant disposés chaque fois sur des parties de châssis opposées (24), **caractérisé en ce que** les dispositifs de réglage (26) sont disposés à des positions en hauteur différentes.

2. Siège selon la revendication 1, **caractérisé en ce qu'**au moyen du dispositif de réglage respectif (26) l'élément de tension associable (20) ou des parties de celui-ci peut/peuvent être tendu(es) dans différentes positions de tension et maintenu(es) dans ces positions, en direction d'au moins une partie de châssis (24) transversalement à la direction longitudinale du siège, et une position de détente peut être atteinte de manière réversible.

3. Siège selon la revendication 2, **caractérisé en ce que** des positions de tension de plus grande précontrainte apparaissent sous l'action croissante du dispositif de réglage (26) et **en ce qu'**il existe dans la position de détente une valeur initiale prédéfinissable d'une précontrainte.

4. Siège selon l'une quelconque des revendications 1 à 3, **caractérisé en ce que**, pour atteindre différentes précontraintes pour l'élément de tension respectif (20) dans une position de tension, il est prévu plusieurs dispositifs de réglage (26) qui, répartis sur la partie de châssis respectivement associable (24), provoquent l'introduction d'une force de traction de préférence différente l'une de l'autre dans l'élément de tension respectif (20).

5. Siège selon la revendication 1, **caractérisé en ce que** l'action du dispositif de réglage respectif (26) sur l'élément de tension respectif (20) se produit dans différentes parties de celui-ci.

6. Siège selon l'une quelconque des revendications précédentes, **caractérisé en ce que** les parties de châssis (24), faisant partie du dossier (12), délimitent un espace, qui est occupé au moins en partie par l'élément de tension respectif (20).

7. Siège selon l'une quelconque des revendications précédentes, **caractérisé en ce que** l'élément de tension respectif (20), composé d'un matériau plat ou de segments individuels, a une extension plate entre les parties de châssis (24) et présente une élasticité prédéfinissable.

8. Siège selon l'une quelconque des revendications 4 à 7, **caractérisé en ce que** le dispositif de réglage respectif (26), qui s'appuie sur la partie de châssis respective (24) avec une force de retenue, provoque l'introduction d'une force de traction dans l'élément de tension respectif (20) au moyen d'une pièce de couplage (pièce de serrage (36)).

9. Siège selon la revendication 7 ou 8,
**caractérisé en ce que** l'élément de tension respectif (20) se compose d'un tissu de préférence à une couche à la marnière d'un tissu textile plat.

10. Siège selon l'une quelconque des revendications 7 ou 8, **caractérisé en ce que** le dispositif de réglage respectif (26) ajuste la pièce de couplage (36) en actionnant une molette (44) pour augmenter la force de traction sur la partie de châssis associable (24).
